# EUROPEAN PATENT APPLICATION

(11) **EP 2 269 729 A1**
(43) Date of publication of application: **05.01.2011**
(21) Application number: 09007863.5
(22) Date of filing: 16.06.2009
(51) Int. Cl.: B01J 23/00, B01J 23/56, B01J 23/63, B01J 23/648, B01J 23/652, B01D 53/86

(54) **Catalyst consisting of platinum supported on chemically promoted magnesium oxide and cerium dioxide towards H2-SCR**

(71) Applicant: Linde AG, 80331 München (DE); University of Cyprus, 1678, Nicosia (CY)
(72) Inventor: Efstathiou, Angelos M., Strovolos 2064 (CY); Olympiou, George, Pallouriotissa (CY)

(57) **Abstract**

The invention relates to a novel catalyst having excellent activity and selectivity for reducing nitric oxides (NO/NO₂) to nitrogen gas (N₂) with hydrogen (H₂) being used as a reducing agent under strongly oxidizing conditions (e.g., 2-10 vol % O₂) (H₂-SCR) in the 100-400 °C range, but in particular to the low-temperature range 110-180 °C. The inventive catalyst comprises of platinum and palladium nanoparticles which are in contact with solid phases of a promoted with e.g. vanadium (e.g. V₂O₅) mixed MgO and CeO₂ medium.

## Description

The invention refers to a catalyst comprising platinum on a support, a process for the preparation of such a catalyst and a use of such a catalyst.

This catalyst can be used in the selective conversion of nitric oxide (NO) or nitric dioxide (NO₂) produced in many industrial combustion processes, to N₂ gas using H₂ as reducing agent. It is known that hydrogen is available in numerous industrial installations. Using the said catalyst, only a very small percentage of the available hydrogen is necessary for the reduction of NOₓ to N₂ under strongly oxidizing conditions (H₂-SCR) in the low-temperature range 100-200 °C.

The selective catalytic reduction of NO with NH₃ (NH₃-SCR) in the presence of an excess of oxygen is at presently considered the state-of-the-art NOₓ control catalytic technology for industrial stationary applications [1]. In this process, ammonia is used to convert NOₓ into nitrogen and water reaction products with N₂ selectivities larger than 95% using vanadium pentoxide (V₂O₅) supported on oxides such as TiO₂, Al₂O₃ and SiO₂ and promoted with WO₃ and MoO₃ [2]. This catalyst is active in the temperature range 300-400 °C [3], whereas other catalyst formulations suitable at lower temperatures (∼200°C) have been commercialised [4]. Nevertheless, the toxicity, handling of ammonia, leaks of unconverted NH₃ to the environment, corrosion and fouling of equipment (formation of ammonium bisulphate), poisoning of the catalyst by SO₂, and high investment costs constitute main problems and concerns nowadays for the use of NH₃-SCR as an industrial NOₓ control technology [1,5].

Selective catalytic reduction (SCR) of NOₓ from an industrial flue gas stream at low-temperatures (120-200°C) has many advantages over that at higher temperatures (e.g., T>250°C). For example, placement of the catalyst after the electrostatic dust precipitator unit implies that the partially cleaned flue gas from dust requires less soot blowing and catalyst cleaning, thus providing longer catalyst lifetime. Furthermore, low-temperature SCR process can reduce both the investment and operating costs since the SCR unit can be located at the end of the stack gas train, thus minimising the need to run ductwork from a high-temperature region and then return the flue gas to the stack gas train. Also, less reheating of the flue gas from the de-SOₓ to the SCR unit is required [4,5]. New low-temperature SCR catalysts are also capable of retrofitting large utility boilers and installations firing natural gas or refinery fuel gas, where better heat economy of the whole flue gas after-treatment process is achieved.

Current concerns regarding carbon dioxide emissions into the atmosphere and the problems resulting from the use of NH₃ as reducing agent [1,4-6] have encouraged a search for suitable molecules different from hydrocarbons for the selective catalytic reduction of NO in gaseous streams derived from combustion processes. It has been reported that hydrogen is a very effective reducing agent for the reaction NO/H₂ [7-17] and can potentially be used for reducing NOₓ emissions derived from stationary combustion sources. Hydrogen is currently used in industrial processes of petroleum refining, such as hydrotreatment and hydrocracking [18-20], the production of methanol [21,22], the conversion of methanol to gasoline [23,24], and the synthesis of ammonia [25,26] and hydrocarbons (Fischer-Tropsch process) [27-29]. Therefore, hydrogen is available in many industrial installations wherein various processes are operated requiring a heat input. Furthermore, the progressive demand for hydrogen with a growth rate of approximately 10 % per year must be added [30], which means that the availability in the industrial sector will be increasing further in the coming years.

Therefore, a low-temperature H₂-SCR of NOₓ technology can be considered as breakthrough *green* and *clean* industrial NOₓ control technology compared to the existing NH₃-SCR technology.

In the last years, a renewed interest in finding suitable catalyst compositions for industrial low-temperature H₂-SCR of NOₓ appeared [31-57]. In most of these publications, supported-platinum catalysts with different support chemical composition and platinum loading (wt%) were investigated. What is learned from these studies is that catalyst performance (NO conversion and N₂-selectivity) strongly depends on the combination of platinum metal loading and support chemical composition in a non-obvious way. Also, the temperature window of operation, ΔT₅₀ (the temperature range for which the NO conversion is at least equal to 50% of the maximum conversion obtained) was found to depend strongly on the latter parameters [50,51]. Supported-palladium catalysts have also been investigated towards H₂-SCR [58-65] but to a significantly less extent than supported-platinum catalysts, whereas low-temperature NOₓ control has been also studied with H₂/CO [66-69] and H₂/CO/CH₄ [70] reducing gas mixtures over supported-palladium catalysts. It appears from these reports that N₂-selctivity of H₂-SCR might be lower or higher than that obtained over supported-platinum catalysts at the same temperature in a non-obvious way, while NO conversion appears in general to be lower on supported-palladium compared to supported-platinum catalysts.

EP-patent 147 5149 (2008) discloses a catalyst for NOₓ control comprising platinum in an amount between 0.1 and 2.0 wt% dispersed on a pre-nitrated and pre-sulphated mixed metal oxide support of magnesium and cerium [57]. The latter supported platinum catalyst provides a high activity (NO conversion larger than 90%) and N₂-selectivity (up to 82%) at low reaction temperatures (e.g. 140-160°C) with a N₂-yield greater than 75%. Hydrogen is used as reducing agent at reaction temperatures between 100°C and 200°C.

### DESCRIPTION OF THE INVENTION

The object of the present invention is an alternative catalyst for the selective conversion of NOₓ to N₂ by H₂ with significantly better performance in the 100-200°C range.

This object is achieved by a catalyst comprising platinum dispersed on a support, whereby the support is a mixture of chemically promoted magnesium oxide and chemically promoted cerium dioxide.

The inventive idea is the use of a chemical promoter. The promoter in the mixed metal oxide support of magnesium oxide and cerium dioxide provides other centers for NOₓ adsorption, thus changing the concentration and reactivity of the active surface absorbed NOₓ species which are then reduced by hydrogen. Also, the chemical promoter could interact directly with the platinum since some platinum is expected to be deposited on the surface of oxides or compounds of the chemical promoter. Thus, different catalytic active components were created. Furthermore, the chemical promoter may change the electronic structure of any of the catalytic surfaces which in turn affected the catalysis at hand through alterations in the binding strength of adsorbed species or surface concentrations or energy barriers for hydrogen diffusion on the catalyst surface. Therefore, very high nitrogen selectivity towards the reduction of NOₓ by hydrogen in the temperature range 100 - 200°C is achieved.

Advantageously the mean primary crystal size of the mixed metal oxide support is between 5 and 10 nm. Within the frame of this invention the mean primary crystal size is determined by X-ray diffraction and using the Scherrer relationship [71].

According to a preferred embodiment of the invention the support is a mixture of vanadium promoted magnesium oxide and vanadium promoted cerium dioxide. New experiments provided evidence that very high N₂-selectivity (S_{N2}, %) values (- 90%) towards H₂-SCR in the 120-160°C range are obtained by a catalyst comprising platinum in an amount between 0.01 and 2.0 wt%, wherein the platinum noble metal is dispersed on a vanadium-promoted MgO and CeO₂ mixed metal oxide of which the mean primary crystals are nano-crystals with a mean primary crystal size less than 10 nm.

Magnesium oxide and/or cerium dioxide promoted by one of the elements of sodium (Na), potassium (K), molybdenum (Mo), and tungsten (W) can be used advantageously in other H₂-SCR feed gas compositions.

Preferably platinum is dispersed in an amount between 0.01 and 2.0 wt% on the promoted mixed metal oxide support.

In another prefered embodiment of the invention palladium in an amount between 0.01 and 2.0 wt% as a second noble metal is dispersed on the mixed metal oxide support. Preferably 0.1wt% of platinum and 0.05 wt% of palladium are dispersed on the promoted mixed metal oxide support. High N₂-selectivity values could be obtained by using a catalyst comprising of platinum and palladium between 0.01 and 2.0 wt%, wherein the platinum and palladium noble metal are dispersed on a preferably vanadium-promoted MgO and CeO₂ mixed metal oxide. The use of primary crystals with a mean crystal size larger than 40 nm is also advantageous.

According to a particular embodiment of the invention the mixed metal oxide support consists of 50 wt% magnesium oxide and 50 wt% cerium dioxide.

The present invention also refers to a process for obtaining a catalyst comprising platinum dispersed on a mixture of promoted magnesium oxide and promoted cerium dioxide comprising the steps:
- impregnating the mixed metal oxide of magnesium oxide and cerium dioxide solids with an aqueous solution containing the desired quantity of the promoter precursor,
- evaporation of water, drying, grinding and heating at 500°C in air flow for at least 2 hours,
- impregnating the resulting solid with an aqueous solution containing the desired quantity of platinum precursor,
- evaporation of water, drying, grinding and heating at 600°C in air flow for at least 2 hours for complete conversion of the platinum precursor into the respective oxide, and
- reduction of the catalyst at 300°C in hydrogen flow for at least 1 hour.

Also, the present invention refers to a process for obtaining a catalyst comprising platinum and palladium dispersed on a mixture of promoted magnesium oxide and promoted cerium dioxide comprising the steps:
- impregnating the mixed metal oxide of magnesium oxide and cerium dioxide solids with an aqueous solution containing the desired quantity of the promoter precursor,
- evaporation of water, drying, grinding and heating at 500°C in air flow for at least 2 hours,
- impregnating the resulting solid with an aqueous solution containing the desired quantity of platinum precursor,
- evaporation of water, drying, grinding and heating at 500°C in air flow for at least 2 hours,
- impregnating the resulting solid with an aqueous solution containing the desired quantity of palladium precursor,
- evaporation of water, drying, grinding and heating at 500°C in air flow for at least 2 hours for complete conversion of the platinum and palladium precursors into the respective oxide, and
- reduction of the catalyst at 300°C in hydrogen flow for at least 1 hour.

In some cases it is useful to impregnate the promoted mixed metal oxide with an aqueous solution containing the desired quantity of platinum precursor and the desired quantity of palladium precursor.

If the catalyst should be used for the NOₓ reduction in gas streams containing SOₓ, an additional step for the pre-nitration and pre-sulphatation of the catalyst is advantageous.

According to a prefered embodiment of the invention, the chemical promoter is one of the elements of vanadium, sodium, potassium, molybdenum and tungsten.

According to an additional particular embodiment, a surface compound of magnesium is formed by interaction between NOₓ (NO and NO₂) species present in the gaseous phase under reaction conditions and the oxide of magnesium present.

According to an additional particular embodiment, a surface compound of cerium is formed by interaction between NOₓ (NO and NO₂) species present in the gaseous phase under reaction conditions and the oxide of cerium present.

According to an additional particular embodiment, a surface compound of vanadium is formed by interaction between NOₓ (NO and NO₂) species present in the gaseous phase under reaction conditions and the oxide of vanadium present.

According to an additional particular embodiment, surface compounds of platinum and palladium are formed by interaction between species present in the gaseous phase under reaction conditions (NO, NO₂, O₂) and metallic platinum and palladium present.

The present invention also refers to the reduction of nitric oxide, nitrogen dioxide and/or mixture of nitric oxide and nitrogen dioxide to N₂ gas using hydrogen as reducing agent in the presence of the catalysts described herein.

Preferably the inventive catalyst is used for the reduction of a chemical compound selected from the group consiting of nitrogen oxide, nitrogen dioxide or a mixture of both to nitrogen using hydrogen as reducing agent in the presence or absence of oxygen.

One embodiment of the invention also refers to a method of reducing a chemical compound selected from the group consisting of NO, NO₂ and/or a mixture of NO and NO₂ to N₂ gas using hydrogen as reducing agent in the presence of oxygen, and also in the presence of other gases, for example H₂O and CO₂, by a catalyst comprising Pt in an amount between 0.01 and 2.0 wt% and Pd in an amount between 0.01 and 2.0 wt%, dispersed on a vanadium-promoted MgO and CeO₂.

According to a particular embodiment in the mentioned method, a reactor selected from the group consisting of a fixed-bed reactor and a monolithic type reactor can be used.

The present invention provides a variety of advantages. First, the low-temperature (120-160°C) activity of the inventive catalyst comprising platinum dispersed on a promoted MgO and promoted CeO₂ mixed metal oxide was much better than the activity of a catalyst comprising platinum dispesed on a non promoted MgO and CeO₂ mixed metal oxide according to prior art. Second, the N₂-selectivity of the inventive catalyst comprising platinum dispersed on a promoted MgO and promoted CeO₂ mixed metal oxide was remarkably increased.

In an preferred embodiment of the invention, the N₂-selectivity of a catalyst comprising platinum and palladium dispersed on a vanadium-promoted MgO and vanadium-promoted CeO₂ mixed metal oxide was remarkably increased by 10-30 percentage units in the H₂-SCR of NO at temperatures in the 120-160°C low-temperature range compared to platinum dispersed on a mixed metal oxide of MgO and CeO₂ according to prior art.

### EXAMPLES OF EMBODIMENT OF THE INVENTION

In the following the invention is described in more detail by examples of preferred embodiments of the invention. There can be no doubt that this detailed description is made by way of illustration only, and it does not limit the extent of the invention since there are many variations that can be made without detracting from the spirit of this invention.

### Example 1

Pt/MgO-CeO₂, Pt/V-MgO-CeO₂, and Pt-Pd/V-MgO-CeO₂ catalysts were prepared by means of the wet impregnation method as follows:

### ● Pt/MgO-CeO₂ Catalyst

0.5 g of commercial nano-crystalline MgO (Aldrich, product no. 549649, mean primary crystal size 9.0 nm) or MgO with larger mean primary crystal size (Aldrich, product no. 288667, mean primary crystal size 44 nm) were mechanically mixed with 0.5 g of commercial nano-crystalline CeO₂ (Aldrich, product no. 544841, mean primary crystal size 5 nm) or CeO₂ with larger mean primary crystal size (Aldrich, product no. 211575, mean primary crystal size 41 nm), and the resulting solid (1.0 g) was impregnated with 200 ml of an aqueous solution containing the desired quantity of hexachloroplatinic acid solution (Aldrich, product no. 262587) so as to yield the desired loading (wt%) of Pt. The excess of water was evaporated with continuous stirring at 60-70 °C and the residue was dried in air at 120 °C for - 12 h. The dry residue was sieved and heated at 600 °C in a flow of 20%O₂/He for at least 2 h in order to remove chlorine from the catalyst surface and convert Pt into PtO₂. The catalyst sample was then reduced in a flow of H₂ (1 bar) at 300 °C for at least 2 h. The content of metallic platinum varied in the 0.01-2.0 wt% range.

### ● Pt/V-MgO-CeO₂ Catalyst

1.0 g of MgO-CeO₂ support prepared as described above was impregnated with 200 ml of an aqueous solution containing the desired quantity of ammonium metavanadate (Aldrich, product no. 31153) so as to yield the desired loading (wt%) of V. The excess of water was evaporated with continuous stirring at 60-70 °C and the residue was dried at 120 °C for ∼12 h. The dry residue was sieved and heated at 500 °C in a flow of air for at least 2 h. The resulting solid was then impregnated with the desired quantity of hexachloroplatinic acid (Aldrich, product no. 262587) so as to yield the desired loading (wt%) of Pt. The excess of water was evaporated with continuous stirring at 60-70 °C and the residue was dried at 120 °C for ∼ 12 h. The dry residue was sieved and heated at 600 °C in a flow of 20%O₂/He for at least 2 h in order to remove chlorine from the catalyst surface and convert Pt into PtO₂. The catalyst sample was then reduced in a flow of H₂ (1 bar) at 300 °C for at least 2 h. The content of metallic platinum varied in the 0.01-2.0 wt% range.

### ● Pt-Pd/V-MgO-CeO₂ Catalyst

1.0 g of V-MgO-CeO₂, prepared according to the same procedure as in the case of PW-MgO-CeO₂ solid, was impregnated with 200 ml of an aqueous solution containing the desired quantity of hexachloroplatinic acid (Aldrich, product no. 262587). The excess of water was evaporated with continuous stirring at 60-70 °C and the residue was dried at 120 °C for ∼ 12 h. The dry residue was sieved and heated at 500 °C in a flow of air for at least 2 h. Following this step, the solid material was again impregnated with 200 ml of an aqueous solution containing the desired quantity of Palladium(II) nitrate solution (Aldrich, product no. 380040). The excess of water was evaporated with continuous stirring at 60-70 °C and the residue was dried at 120 °C for - 12 h. The dry residue was sieved and heated at 500 °C in a flow of 20%O₂/He for at least 2 h in order to remove chlorine and nitrates from the solid surface and convert Pt and Pd into their respective metal oxides. The solid catalyst was then reduced in a flow of H₂ (1 bar) at 300 °C for at least 2 h. The content of metallic platinum (Pt) and palladium (Pd) was varied in the 0.01-2.0 wt% and 0.01-2.0 wt% range, respectively.

As will be shown in Example 3, the combination of Pt, Pd, V, MgO and CeO₂, the latter two solids having a primary crystal size larger than 40 nm, with the said chemical composition in a non-obvious way, resulted in remarkable improvements of N₂-selectivity (10-30 percentage units) in the low-temperature range (120-180°C) of H₂-SCR at the said feed gas composition as compared to the Pt/MgO-CeO₂ chemical composition previously reported by us [57]. Also, as will be shown in Example 4, the combination of Pt, V, MgO and CeO₂, the latter two solids having a primary crystal size smaller than 10 nm, with the said chemical composition in a non-obvious way resulted also in significant improvements of N₂-selectivity (about 10 percentage units increase) in the low-temperature range 120-150°C of H₂-SCR at the said feed gas composition as compared to the Pt/MgO-CeO₂ chemical composition previously reported by us [57].

### Example 2

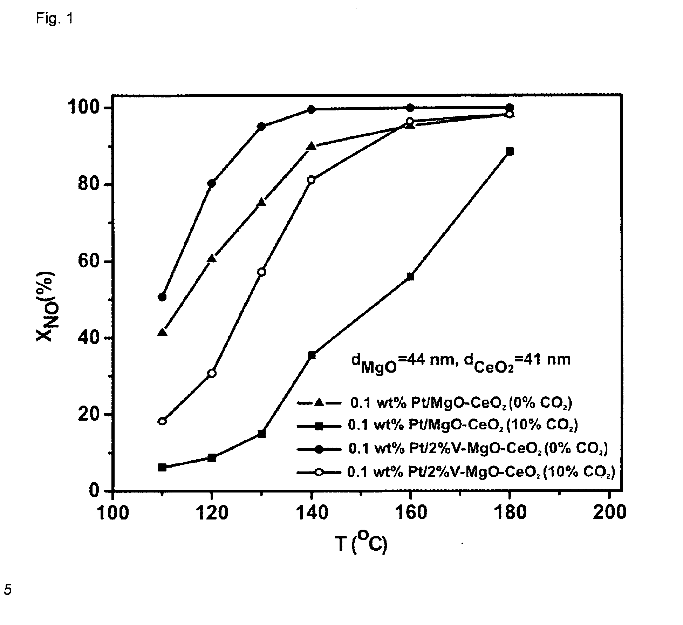

The effect of 2 wt% vanadium (V) loading on the conversion of NO (X_{NO}, %) for the H₂-SCR of NO obtained in the 120-180°C range, after 30 min on reaction stream (steady state) at each reaction temperature, is illustrated in Figure 1 over the 0.1 wt% Pt/2 wt%V-MgO-CeO₂ and 0.1 wt% Pt/MgO-CeO₂ catalysts. The mean primary crystal size of MgO and CeO₂ support phases used was 44 and 41 nm, respectively. A catalyst sample of 0.3 g was placed in a fixed-bed quartz micro-reactor, and it was first calcined in 20%O₂/He gas flow (50 NmUmin) at 600°C for 3 h, followed by H₂ reduction (1 bar H₂, 50 NmUmin) before the reaction feed gas mixture of 500 ppm NO, 0.8 vol% H₂, 5 vol% O₂ and 94.15 vol% He or 500 ppm NO, 0.8 vol% H₂, 5 vol% O₂, 10 vol% CO₂, and 84.15 vol% He at a GHSV of approximately 80,000 h⁻¹ was used.

Figure 1 clearly demonstrates that the use of 2 wt% V-MgO-CeO₂ (magnesium oxide and cerium dioxide promoted with vanadium) as a carrier to deposit 0.1 wt% Pt resulted in a remarkable improvement of NO conversion when 10 vol% CO₂ was present in the reaction feed stream, compared to the case of use of MgO-CeO₂ carrier. For example, at 130°C the NO conversion (%) was increased from 15% to 57% (an increase by a factor of 3.8), whereas at 140 and 160°C an increase by a factor of 2.3 and 1.7, respectively, was obtained. Improvements to a lesser extent in the NO conversion were seen in the absence of CO₂ in the reaction feed stream (see Fig. 1).

However, it should be stressed that in a real flue gas stream composition in de-NOₓ industrial applications more than 10 vol% CO₂ is present. Similar results to those depicted in Fig. 1 were obtained when 10 vol% H₂O was also present in the 500 ppm NO, 0.8 vol% H₂, 5 vol% O₂, 10 vol% CO₂, He reaction feed gas composition. It is also stressed the fact that in the whole temperature range of 120-180°C the NO conversion was in the 80-100% range at the GHSV of 80,000 h⁻¹, one of the highest space velocities expected in industrial de-NOₓ applications. Larger NO conversions by about 5-12 percentage units were measured at a GHSV of 40,000 h⁻¹ for the same reaction conditions.

Vanadium (V) loadings in the 0.1-12 wt% range were investigated, where it was found that the optimum loading for the 0.1wt% Pt/x wt% V-MgO-CeO₂ catalytic system strongly depends not only on the reaction feed gas composition in NO, O₂ and H₂ gases but also on the primary crystal size of MgO and CeO₂ support used, as it is illustrated in the following Example 4.

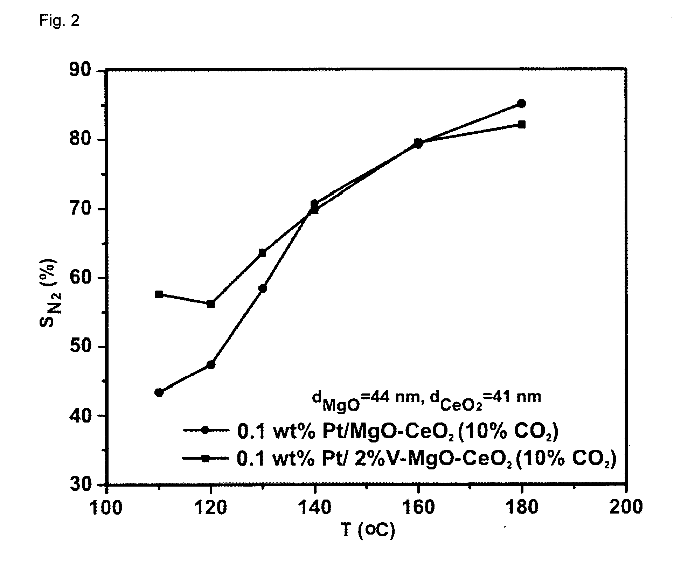

Figure 2 presents the corresponding effect of 2 wt% vanadium (V) loading on the N₂-selectivity (S_{N2}, %) of the H₂-SCR of NO under the same reaction conditions depicted in Fig. 1 in the case of use of a reaction feed stream consisting of 500 ppm NO, 0.8 vol% H₂, 5 vol% O₂, 10 vol% CO₂, and 84.15 vol% He. It is seen that in the lowest reaction temperature range of 110-130°C, an increase in S_{N2}(%) between 6 and 15 percentage units was observed, whereas at higher temperatures S_{N2}(%) was practically the same. Siginificantly larger N₂-selectivity values were obtained at another V loading (wt%) and feed gas composition, as it is illustrated in the following Example 3. It was also found that using these particular catalyst compositions the N₂-selectivity of the H₂-SCR obtained in the presence of CO₂ in the feed stream (NO/H₂/O₂) was always larger by 5-15 percentage units compared to the case of absence of CO₂ from the reaction feed stream.

Pt loadings in the 0.01 - 2.0 wt% range were investigated, where an optimum Pt loading of 0.1 wt% resulted in the catalytic performance (X_{NO}(%) and S_{N2}(%)) presented in Figs. 1 and 2.

### Example 3

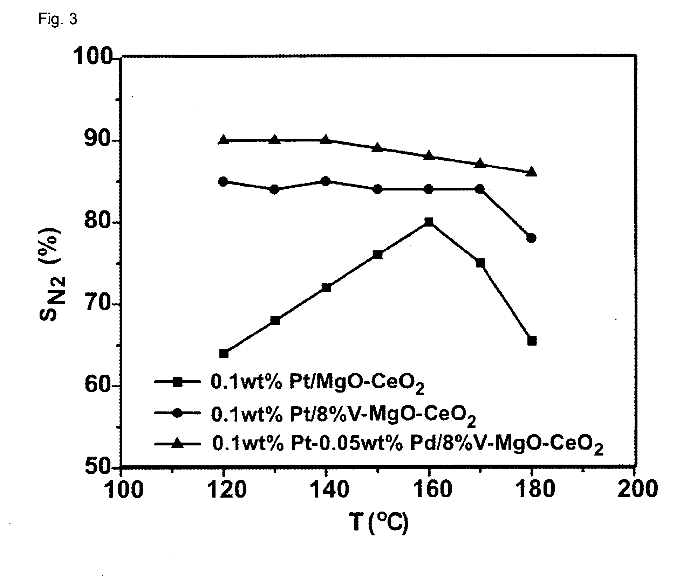

In this example, the effect of combination of V and Pd chemical promoters of the N₂-selectivity (S_{N2}, %) of H₂-SCR of NO with Pt/MgO-CeO₂ is illustrated (Figure 3). Results refer to the development of a novel catalytic system whch resulted as the combination of 0.1 wt% Pt and 0.05 wt% Pd with the 8 wt% V-MgO-CeO₂ carrier. The mean primary crystal size of MgO and CeO₂ support phases was 44 and 41 nm, respectively. For comparison purposes, results obtained with the 0.1 wt% Pt/MgO-CeO₂ and 0.1 wt% Pt/8 wt% V-MgO-CeO₂ catalytic systems are also presented (Fig. 3). The amount of catalyst used was 0.3 g, and a reaction feed stream of 500 ppm NO, 0.7 vol% H₂, 3 vol% O₂, and 96.25 vol% He at a GHSV of approximately 80,000 h⁻¹ was used. Remarkable improvements in the S_{N2}(%) at the lowest temperature range of 120-150°C were obtained, ranging from 13 to 26 percentage units. In particular, at 120°C an increase in S_{N2}(%) from 64% to 90% was obtained when the 0.1 wt% Pt/MgO-CeO₂ catalyst was promoted with 0.05 wt% Pd and 8 wt% V. It should be noted that NO conversions (X_{NO}, %) larger than 85% were achieved in the 120-160°C range with the present Pt-Pd/V-MgO-CeO₂ catalyst for the conditions of the experiments presented in Fig. 3.

Pt and Pd loadings lower than 0.1 wt% or larger than 2.0 wt% did not result in better catalytic performance (S_{N2}(%) as that presented in Fig. 3. An optimum Pt and Pd loading was found to depend on the loading (wt%) of V but also on the mean primary crystal size of MgO and CeO₂ used to deposit V, Pt and Pd.

### Example 4

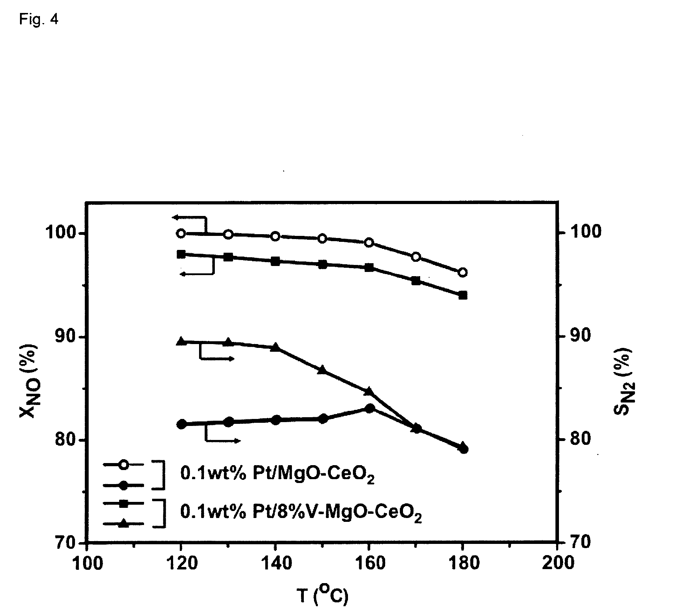

This example illustrates the effect of using *nano-crystalline* MgO and CeO₂ support phases (mean primary crystal size lower than 10 nm) to deposit the combination of Pt and V catalytic and chemical promoter components, respectively, on the low-temperature H₂-SCR of NO in terms of NO conversion, X_{NO}(%) and N₂-selectivity, S_{N2}(%). A catalyst sample of 0.3 g and a feed gas composition of 500 ppm NO, 0.7 vol% H₂, 3 vol% O₂ and 96.25 vol% He at a GHSV of approximately 40,000 h⁻¹ were used. As clearly illustrated in Fig. 4, remarkably high N₂-selectivity values (- 88-90%) are obtained at the lowest reaction temperature range of 120-150°C, larger by about 10 percentage units when a combination of 0.1 wt% Pt and 8 wt% V are deposited on nano-crystalline MgO and CeO₂ carriers compared to 0.1 wt% Pt deposition alone. It is pointed out that the corresponding NO conversion observed in both catalytic systems is very similar since it varies only by 2-3 percentage units. In the case of use of larger MgO (44 nm) and CeO₂ (41 nm) primary crystals (Fig. 1, no CO₂ present in the feed stream), the effect of V deposition was to reduce slightly the S_{N2}(%) in the 120-160°C range, result opposite to that seen in the case of use of nano-crystalline MgO and CeO₂ support phases (Fig. 4).

It is pointed out the wide temperature-window of operation achieved in the catalytic systems presented in Fig. 4, where only small variations in NO conversion and N₂-selectivity are observed in the whole 120-180°C range. The same is true for the Pt-Pd/V-MgO-CeO₂ catalyst as illustrated in Fig. 3. This result has significant applications in industrial catalytic reactors where isothermal operation of exothermic reactions (as the present network of reactions in H₂-SCR technology) is not easy to control. This behaviour is likely to be due to the formation of a number of different in structure active adsorbed NOₓ species on the periphery of Pt and Pd nano-particles with the VOₓ, MgO and CeO₂ crystals, as evidenced in the case of Pt/MgO-CeO₂ catalyst [72,73]. Also, the likely formation of Pt-Pd alloy nano-particles might enhance surface hydrogen diffusion from the noble metal to the metal-support interface, the latter step proved to be an important step in the mechanism of H₂-SCR over Pt/MgO-CeO₂ [72,73].

Pt loadings in the 0.01-2 wt% range and V loadings in the 0.1-10 wt% did not result in better catalytic performance in terms of N₂-selectivity to that presented in Fig. 4. N₂-selectivities larger than 90% could only be obtained with lower NO feed concentrations (<500 ppm).

### Example 5

This example reports on the use of other than vanadium (V) chemical promoters of the catalytic performance of Pt/MgO-CeO₂ and Pt-Pd/MgO-CeO₂ solids. Sodium (Na), potassium (K), or tungsten (W), or molybdenum (Mo) were deposited on the MgO-CeO₂ mixed metal oxide following exactly the same procedure as for vanadium (V) which is described in Example 1. Sodium and potassium loadings were varied in the 0.05-2.0 wt% range, tungsten loading in the 0.05-15 wt% range, and molybdenum loading in the 0.05-15 wt% range. In the case of use of 0.1 wt% Pt/MgO-CeO₂ in combination with one of these four chemical promoters (Na, K, W, Mo) in the loading range given above, and after using a feed gas composition consisting of 500 ppm NO/0.7 vol%H₂/3vol%O₂/He at a GHSV of 80,000 h⁻¹, no better catalytic behavior compared to that obtained with vanadium (V) chemical promoter (Examples 1-4) was obtained. However, it should be pointed out that the use of any of these chemical promoters (Na, K, W, Mo) with Pt/MgO-CeO₂ or Pt-Pd/MgO-CeO₂ catalysts under different feed gas compositions with respect to NO, H₂, and O₂, leading to better than vanadium (V) catalytic performance cannot be excluded.

### BRIEF DESCRIPTION OF THE FIGURES

Figure 1 illustrates the effect of 2 wt% vanadium deposited on MgO and CeO₂ support solid phases (50 wt% MgO-50 wt% CeO₂) on the NO conversion, X_{NO}(%) towards H₂-SCR in the low-temperature range of 110-180°C over 0.1 wt%Pt/2 wt% V-MgO-CeO₂ catalyst. Reaction conditions: NO = 500 ppm; H₂= 0.8 vol%; O₂ = 5 vol%; x vol%CO₂ (x=0, 10); He balance gas. Mass of catalyst, W = 0.3 g; GHSV = 80,000 h⁻¹; Pₜₒₜ = 1.0 bar. For comparison purposes the X_{NO}(%) versus reaction temperature, T(°C) behaviour over the 0.1 wt% Pt/MgO-CeO₂ (absence of 2 wt% V) is also presented. The mean primary crystal size of MgO and CeO₂ support phases used was 44 and 41 nm, respectively.

Figure 2 illustrates the effect of 2 wt% vanadium deposited on MgO and CeO₂ support solid phases (50 wt% MgO-50 wt% CeO₂) on the N₂-selectivity, S_{N2}(%) of H₂-SCR in the low-temperature range of 110-180°C over 0.1 wt% Pt/2 wt% V-MgO-CeO₂ catalyst. Reaction conditions: NO = 500 ppm; H₂= 0.8 vol%; O₂ = 5 vol%; 10 vol%CO₂; He balance gas. Mass of catalyst, W = 0.3 g; GHSV = 80,000 h⁻¹; Pₜₒₜ = 1.0 bar. For comparison purposes the S_{N2}(%) versus reaction temperature, T(°C) behaviour over the 0.1 wt% Pt/MgO-CeO₂ (absence of 2 wt% V) is also presented. The mean primary crystal size of MgO and CeO₂ support phases used was 44 and 41 nm, respectively.

Figure 3 compares the N₂-selectivity, S_{N2} (%) of H₂-SCR obtained in the low-temperature range of 120-180°C over 0.1 wt% Pt supported on MgO-CeO₂ (■) or 8 wt% V-MgO-CeO₂ (●), and 0.1 wt% Pt - 0.05 wt% Pd supported on 8 wt% V-MgO-CeO₂ (▲) (d_{MgO}= 44 nm; d_{CeO2} = 41 nm). Reaction conditions: NO = 500 ppm; H₂= 0.7 vol%; O₂ = 3 vol%; He balance gas. Mass of catalyst, W = 0.3 g; GHSV = 80,000 h⁻¹; Pₜₒₜ = 1.0 bar.

Figure 4 illustrates the effect of 8 wt% vanadium deposited on MgO and CeO₂ support solid phases (50 wt% MgO-50 wt% CeO₂) on the NO conversion, X_{NO}(%) and N₂-selectivity, S_{N2}(%) of H₂-SCR in the low-temperature range of 110-180°C over 0.1 wt% Pt/8 wt% V-MgO-CeO₂ catalyst. Reaction conditions: NO = 500 ppm; H₂= 0.7 vol%; O₂ = 3 vol%; He balance gas. Mass of catalyst, W = 0.3 g; GHSV = 40,000 h⁻¹; Pₜₒₜ = 1.0 bar. For comparison purposes the X_{NO}(%) and S_{N2}(%) versus the reaction temperature, T(°C) behaviour of H₂-SCR over the 0.1 wt% Pt/MgO-CeO₂ (absence of 8 wt% V) is also presented. The mean primary crystal size of MgO and CeO₂ support phases used was 9.0 and 5 nm, respectively (nano-crystalline support phases).

### Cited bibliography

1. G. Ertl, H. Knözinger, J. Weitkamp, in Handbook of Heterogeneous Catalysis, VCH, Weinheim, Germany, 1997, p. 1633; F. Nakajima, I. Hamada, Catal. Today 29 (1996) 109; G. Busca, L. Lietti, G. Ramis, F. Berti, Appl. Catal. B: Environ. 18 (1998) 1; V.I. Parvulescu, P. Grange, B. Delmon, Catal. Today 46 (1998) 233.
2. C. J. Pereria, K.W. Phumlee, Catal. Today 13 (1992) 23.
3. A. Fritz, V. Pitchon, Appl. Catal. B: Environ. 13 (1997) 1.
4. L. Singoredjo, R. Korver, F. Kapteijn, J. Moulijn, Appl. Catal. B: Environ. 1 (1992) 297.
5. H. Gutberlet, B. Schallert, Catal. Today 16 (1993) 207.
6. B. Rausenberger, W. Swiech, A.K. Schmid, C.S. Rastomjee, W. Emgel, A.M. Bradshaw, J. Chem. Soc., Faraday Trans. 94(7) (1998) 963.
7. R. Dumpelmannm, N.W. Cant, D.L. Trimm in A. Frennet and J.-M. Bastin (Eds.) 3rd ICC and Automotive Pollution Control, Brussels, 2 (1994) 13.
8. K. Tomishige, K. Asakura, U. Iwasawa, J. Catal. 157 (1995) 472.
9. W.C. Hecker, A.T. Bell, J. Catal. 92 (1985) 247.
10. A. Hornung, M. Muhler, G. Ertl, Catal. Lett. 53 (1998) 77.
11. T.P. Kobylinski, B.W. Taylor, J. Catal. 33 (1974) 376.
12. S.J. Huang, A.B. Walters, M.A. Vannice, J. Catal. 173 (1998) 229.
13. R. Burch, S. Squire, Catal. Lett. 27 (1994) 177.
14. T.M.Salama, R. Ohnishi, T. Shido, M. Ichikawa, J. Catal. 162 (1996) 169.
15. K. Tanaka, H. Yokota, M. Doi, M. Sugiura, Chem. Lett. (1997) 273.
16. A. Lindsteld, D. Strömberg, M.A. Milh, Appl. Catal. 116 (1994) 109.
17. D. Ferri, L. Forni, M.A.P. Dekkers, B.E. Nieuwenhuys, Appl. Catal. B: Environ. 16 (1998) 339.
18. J.R. Rostrup-Nielsen, Catal. Today 18 (1993) 305.
19. I. Alstrup, J. Catal. 109 (1998) 241.
20. S.T.Ceyer, Q.Y. Yang, M.B. Lee, J.D. Beckerle, A.D. Johnson, Stud. Surf. Sci. Catal. 36 (1987) 51.
21. I. Alstrup, M.T. Travers, J. Catal. 135 (1992) 147.
22. T.B. Beebe, Jr., D.W. Goddman, B.D. Kay, T.J. Yates, Jr., J. Chem. Phys. 87 (1987) 2305.
23. I. Alstrup, I. Chorkendorff, S. Ullmann, Surf. Sci. 234 (1990) 79.
24. H.J. Topfer, Gas Wasserfach 117 (1976) 412.
25. S. Tenner, Hydrocarbon Processing 66(7) (1987) 42.
26. A.T. Ashcroft, A.K. Cheetham, M.L.H. Green, P.D.F. Vernon, Nature 352 (1991) 225.
27. J.T. Richardson, S.A. Paripatyadar, Appl. Catal. 61 (1990) 293.
28. I.M. Bodrov, L.O. Apel'baum, Kinet. Katal. 8 (1967) 379.
29. I.M. Bodrov, L.O. Apel'baum, Kinet. Katal. 5 (1964) 696.
30. M.A. Peña, J.P. Gomez, J.L.G. Fierro, Appl. Catal. A: Chem. 144 (1996) 7.
31. B. Frank, G. Emig, A. Renken, Appl. Catal. B: Environ. 19 (1998) 45.
32. R. Burch, M.D. Coleman, Appl. Catal. B. Environ. 23 (1999) 115.
33. A. Ueda, T. Nakao, M. Azuma, T. Kobayashi, Catal. Today 45 (1998) 135.
34. K. Yokota, M. Fukui, T. Tanaka, Appl. Surf. Sci 121/122 (1997) 273.
35. M. Machida, S. Ikeda, D. Kurogi, T. Kijima, Appl. Catal. B: Environ. 35 (2001) 107.
36. R. Burch, P.J. Millington, A.P. Walker Appl. Catal B. Environ. 4 (1994) 160.
37. M. Fukui, K. Yokata, Shokubai, Catal. Catal. 36 (1994) 160.
38. J. Shibata, M. Hashimoto, K. Shimizu, H. Yoshida, T. Hattori, A. Satsuma, J. Phys. Chem. B 108 (2004) 18327.
39. L. Fu, K.T. Chuang, Energy Fuels 3 (1989) 740.
40. M. Machida, T. Watanabe, Appl. Catal. B: Environ. 52 (2004) 281.
41. T. Nanba, C. Kohno, S. Masukawa, J. Uchisawa, N. Nakayama, A. Obuchi, Appl. Catal. B: Environ. 46 (2003) 353.
42. M. Machida, Catal. Surveys Japan 5 (2002) 91.
43. T. Nanba, K. Sugawara, S. Masukawa, J. Uchisawa, A. Obuchi, Top. Catal. 42/43 (2007) 129.
44. S. Hamada, S. Hibarino, K. Ikeue, M. Machida, Appl. Catal. B: Environ. 74 (2007) 197.
45. S. Hamada, K. Ikeue, M. Machida, Appl. Catal. B: Environ. 71 (2007) 1.
46. Y. Hasegawa, M. Haneda, Y. Kintaichi, H. Hamada, Appl. Catal. B: Environ. 60 (2005) 41.
47. M. Engelmann-Pirez, P. Granger, G. Leclercq, Catal. Today 107/108 (2005) 315.
48. M. Machida, T. Watanabe, Appl. Catal. B: Environ. 52 (2004) 281.
49. J. Shibata, M. Hashimoto, K. Shimizu, H. Yoshida, T. Hattori, A. Satsuma, J. Phys. Chem. B 108 (2004) 18327.
50. C.N. Costa, V.N. Stathopoulos, V.C. Belessi, A.M. Efstathiou, J. Catal. 197 (2001) 350.
51. C.N. Costa, P.G. Sawa, C. Andronikou, G. Lambrou, K. Polychronopoulou, V.N. Stathopoulos, V.C. Belessi, P.J. Pomonis, A.M. Efstathiou, J. Catal. 209 (2002) 456.
52. C.N. Costa, A.M. Efstathiou, Environ. Chem. Lett. 2 (2004) 55.
53. C.N. Costa, A.M. Efstathiou, J. Phys. Chem. B 108 (2004) 2620.
54. C.N. Costa, A.M. Efstathiou, Appl. Catal. B: Environ. 72 (2007) 240.
55. C.N. Costa, P.G. Savva, J.L.G. Fierro, A.M. Efstathiou, Appl. Catal. B: Environ. 75 (2007) 147.
56. A.M. Efstathiou, C.N. Costa, J.L.G. Fierro, "Novel Catalyst for the Reduction of NO to N2 with Hydrogen under NOx Oxidation Conditions, Spanish Patent ES 2 192 985 B1 (2005); US-Patent 7,105,137 (2006).
57. A.M. Efstathiou, C.N. Costa, J.L.G. Fierro, "Catalyst Containing Platinum on a Support Consisting of Magnesium Oxide and Cerium Oxide for the Reduction of NO to N2 with Hydrogen Under NOx Oxidation Conditions", EP-Patent No. 1 475 149 (2008).
58. K. Yokota, M. Fukui, T. Tanaka, Appl. Surf. Sci. 121/122 (1997) 273.
59. R. Burch, M.D. Coleman, Appl. Catal. B: Environ. 23 (1999) 115.
60. M. Machida, D. Kurogi, T. Kijima, Chem. Mater. 12 (2000) 3165.
61. M. Machida, D. Kurogi, T. Kijima, J. Phys. Chem. B 107 (2003) 196.
62. G. Qi, R.T. Yang, F.C. Rinaldi, J. Catal. 237 (2006) 381.
63. I. Twagirashema, M. Engelmann-Pirez, M. Frere, L. Burylo, L. Gengembre, C. Dujardin, P. Granger, Catal. Today 119 (2007) 100.
64. I. Twagirashema, M. Frere, L. Gengembre, C. Dujardin, P. Granger, Top. Catal. 42/43 (2007) 171.
65. F. Dhainaut, S. Pietrzyk, P. Granger, Top. Catal. 42/43 (2007) 135.
66. N. Macleod, R.M. Lambert, Catal. Commun. 3 (2002) 61.
67. Y.-W. Lee, E. Gulari, Catal. Commun. 5 (2004) 499.
68. N. Macleod, R. Cropley, J.M. Keel, R.M. Lambert, J. Catal. 221 (2004) 20.
69. M. Konsolakis, M. Vrontaki, G. Avgouropoulos, T. loannides, I.V. Yentekakis, Appl. Catal. B: Environ. 68 (2006) 59.
70. J.A.Z. Pieterse, S. Booneveld, Appl. Catal. B: Environ. 73 (2007) 327.
71. A.L. Patterson, Phys. Rev. 56 (1939) 978.
72. C.N. Costa, A.M. Efstathiou, J. Phys. Chem. C 111 (2007) 3010.
73. P.G. Savva, A.M. Efstathiou, J. Catal. 257 (2008) 324.

## Claims

1. Catalyst comprising platinum dispersed on a support, **characterised in that** the support is a mixture of chemically promoted magnesium oxide and chemically promoted cerium dioxide.

2. Catalyst according to claim 1, **characterised in that** the mean primary crystal size of the mixed metal oxide support is between 5 nm and 10 nm.

3. Catalyst according to claim 1 or 2, **characterised in that** the support is a mixture of vanadium promoted magnesium oxide and vanadium promoted cerium dioxide.

4. Catalyst according to any of the claims 1 to 3, **characterised in that** magnesium oxide and/or cerium dioxide are promoted by one of the elements of sodium, potassium, molybdenum and tungsten.

5. Catalyst according to any of the claims 1 to 4, **characterised in that** platinum is dispersed in an amount between 0.01 and 2.0 wt% on the promoted mixed metal oxide support.

6. Catalyst according to any of the claims 1 to 5, **characterised in that** palladium in an amount between 0.01 and 2.0 wt% as a second noble metal is dispersed on the promoted mixed metal oxide support.

7. Catalyst according to claim 6, **characterised in that** 0.1wt% of platinum and 0.05 wt% palladium are dispersed on the promoted mixed metal oxide support.

8. Catalyst according to any of the claims 1 to 7, **characterised in that** the mixed metal oxide support consists of 50 wt% magnesium oxide and 50 wt% cerium dioxide.

9. Process for obtaining a catalyst comprising platinum dispersed on a mixture of promoted magnesium oxide and promoted cerium dioxide comprising the steps:
- impregnating the mixed metal oxide of magnesium oxide and cerium dioxide solids with an aqueous solution containing the desired quantity of the promoter precursor,
- evaporation of water, drying, grinding and heating at 500°C in air flow for at least 2 hours,
- impregnating the resulting solid with an aqueous solution containing the desired quantity of platinum precursor,
- evaporation of water, drying, grinding and heating at 600°C in air flow for at least 2 hours for complete conversion of the platinum precursor into the respective oxide, and
- reduction of the catalyst at 300°C in hydrogen flow for at least 1 hour.

10. Process for obtaining a catalyst comprising platinum and palladium dispersed on a mixture of promoted magnesium oxide and promoted cerium dioxide comprising the steps:
- impregnating the mixed metal oxide of magnesium oxide and cerium dioxide solids with an aqueous solution containing the desired quantity of the promoter precursor,
- evaporation of water, drying, grinding and heating at 500°C in air flow for at least 2 hours,
- impregnating the resulting solid with an aqueous solution containing the desired quantity of platinum precursor,
- evaporation of water, drying, grinding and heating at 500°C in air flow for at least 2 hours,
- impregnating the resulting solid with an aqueous solution containing the desired quantity of palladium precursor,
- evaporation of water, drying, grinding and heating at 500°C in air flow for at least 2 hours for complete conversion of the platinum precursor and the palladium precursor into the respective oxide, and
- reduction of the catalyst at 300°C in hydrogen flow for at least 1 hour.

11. Process according to claim 9 or 10, **characterised in that** the promoter is one of the elements of vanadium, sodium, potassium, molybdenum and tungsten.

12. Use of a catalyst according to any of the claims 1 to 8 for the reduction of a chemical compound selected from the group consiting of nitrogen oxide, nitrogen dioxide or a mixture of both to nitrogen using hydrogen as reducing agent in the presence or absence of oxygen.
